# EUROPEAN PATENT APPLICATION

(11) **EP 2 335 470 A1**
(43) Date of publication of application: **22.06.2011**
(21) Application number: 09425512.2
(22) Date of filing: 18.12.2009
(51) Int. Cl.: A01D 45/02

(54) **A machine for harvesting maize**

(71) Applicant: Olimac S.r.l., 12081 Beinette (CN) (IT)
(72) Inventor: Carboni, Lorenzo, 12081 Beinette (CN) (IT)
(74) Representative: Marchitelli, Mauro

(57) **Abstract**

A machine for harvesting maize, comprising a supporting structure (12) carrying a plurality of harvesting units (18) set alongside one another in a transverse direction, wherein each harvesting unit (18) comprises:

- a framework (26) fixed with respect to the supporting structure (12) and including two box sections (28) set at a distance from one another in a transverse direction by an empty space (30) elongated in a longitudinal direction (A);
- two stripper plates (44) carried by respective box sections (28), the stripper plates (44) having respective top surfaces (44a) and respective edges (46) facing one another that extend on opposite sides in said empty space (30), the facing edges (46) of said stripper plates (44) forming a squeezing channel (48);
- a pair of counter-rotating traction rollers (82) arranged underneath said squeezing channel (48), set for drawing downwards stalks of maize plants contained in said squeezing channel (48) in such a way that, in operation, the cobs (C) of the maize plants contained in said squeezing channel (48) are detached from the respective stalks and gather on said top surfaces (44a) of said stripper plates (44); and
- a pair of harvesting chains (24), which move along respective closed-loop paths and are equipped with respective thrust elements (96), which move on top of respective top surfaces (44a) of said stripper plates (44) for drawing in a direction of harvesting (D) the cobs (C) that lie on said stripper plates (44), wherein at least one of said thrust elements (96) of each of said harvesting chains (24) carries a member for gathering grains (98) that slides on the top surface (44a) of the respective stripper plate (44) for pushing loose grains of maize (G) that lie on said top surfaces (44a) in said direction of harvesting (D).

## Description

### BACKGROUND OF THE INVENTION

### 1. Field of the invention

The present invention relates to a machine for harvesting maize, designed to be applied to the front part of a combine harvester.

### 2. Description of the prior art

Machines for harvesting maize of the most widely used type comprise a supporting structure designed to be fixed to the combine harvester and carrying a plurality of harvesting units set alongside one another in a transverse direction. Each harvesting unit is dedicated to the harvesting of a row of maize plants. Each harvesting unit usually comprises a fixed framework carrying two stripper plates. Said stripper plates have respective edges facing one another that form a squeezing channel for the maize stalks. Each harvesting unit comprises a pair of counter-rotating traction rollers arranged underneath the squeezing channel. The traction rollers grip the maize stalks and draw them downwards, passing the stalks between the facing edges of the stripper plates. The cobs of maize come into contact with the top surfaces of the stripper plates and are detached from the stalks as a result of the stalks being drawn down by the traction rollers. The cobs detached from the stalks gather on the top surface of the stripper plates. A pair of harvesting chains is located on top of the stripper plates. The harvesting chains are equipped with respective thrust elements that convey in a direction of harvesting the cobs that lie on the stripper plates.

In order to ensure a high productivity, the maize stalks are drawn downwards at a high speed. This leads to a high-speed impact of the cobs on the top surfaces of the stripper plates.

A drawback of this type of machines is that the impact of the cobs on the stripper plates causes a detachment of the grains of maize from the cores of the cobs. This problem becomes of particular importance when harvesting very dry maize. On the one hand, harvesting of dry maize is very advantageous since it avoids a subsequent drying step after harvesting. On the other hand, in the case of dry maize, the grains detach easily from the core and the impact at high speed of the cobs on the stripper plates leads to a loss of useful crop on account of the removal of the grains from the cobs.

### SUMMARY OF THE INVENTION

The object of the present invention is to provide a machine for harvesting maize that will enable reduction of the loss of useful crop due to the removal of the grains from the cobs.

According to the present invention, this object is achieved by a machine having the characteristics forming the subject of Claim 1.

According to the present invention, at least one of the thrust elements of each harvesting chain carries a member for gathering the grains, which slides on the top surface of the respective stripper plate to push the grains of maize that have detached from the cores of the cobs and are lying on the top surfaces of the stripper plates in the direction of harvesting.

In this way, also the loose grains that have detached from the cores of the cobs during the detachment of the cobs from the stalks are conveyed towards the combine harvester.

The present invention enables reduction of the loss of crop due to the removal of the grains from the cobs and increase in the useful yield without the need to make substantial modifications to the structure of the machine.

### DESCRIPTION OF THE DRAWINGS

The present invention will now be described in detail with reference to the annexed drawings, which are provided purely by way of non-limiting example and in which:
- Figure 1 is a perspective view of a machine for harvesting maize according to the present invention;
- Figure 2 is a perspective view of a harvesting unit indicated by the arrow II in Figure 1;
- Figure 3 is an exploded perspective view of the harvesting unit of Figure 2; and
- Figure 4 is a perspective view at a larger scale of the part indicated by the arrow IV in Figure 2.

### DESCRIPTION OF THE PREFERRED EMBODIMENT

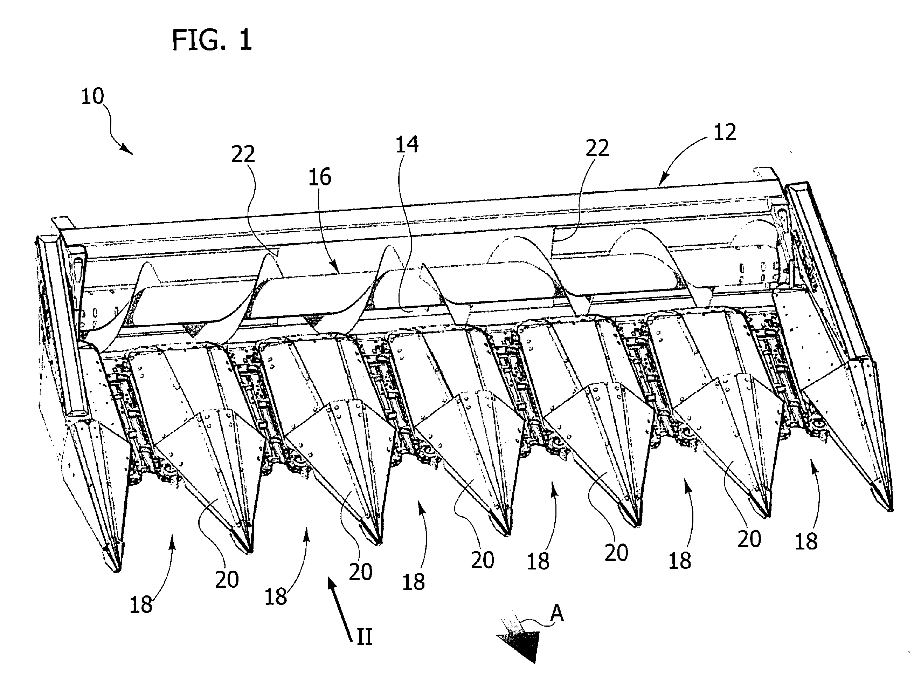

With reference to Figure 1, designated by 10 is a machine for harvesting maize designed to be applied to the front part of a combine harvester for harvesting maize of a conventional type (not illustrated). The machine 10 comprises a supporting structure 12 equipped with means (not illustrated) for connection to the combine harvester. The supporting structure 12 has a transverse conveying channel 14, associated to which is a worm conveyor 16.

The supporting structure 12 carries a plurality of harvesting units 18, set alongside one another in a transverse direction with respect to the direction of advance of the machine 10, indicated by the arrow A in Figure 1. Separation prongs 20 are arranged between adjacent harvesting units 18. The harvesting units 18 carry out detachment of the cobs from the maize stalks in the way that will be described in what follows. The harvesting units 18 convey the cobs towards the conveying channel 14. The worm conveyor 16 conveys the cobs contained in the conveying channel 14 towards openings 22 of the supporting structure 12, which face respective loading mouths of the combine harvester.

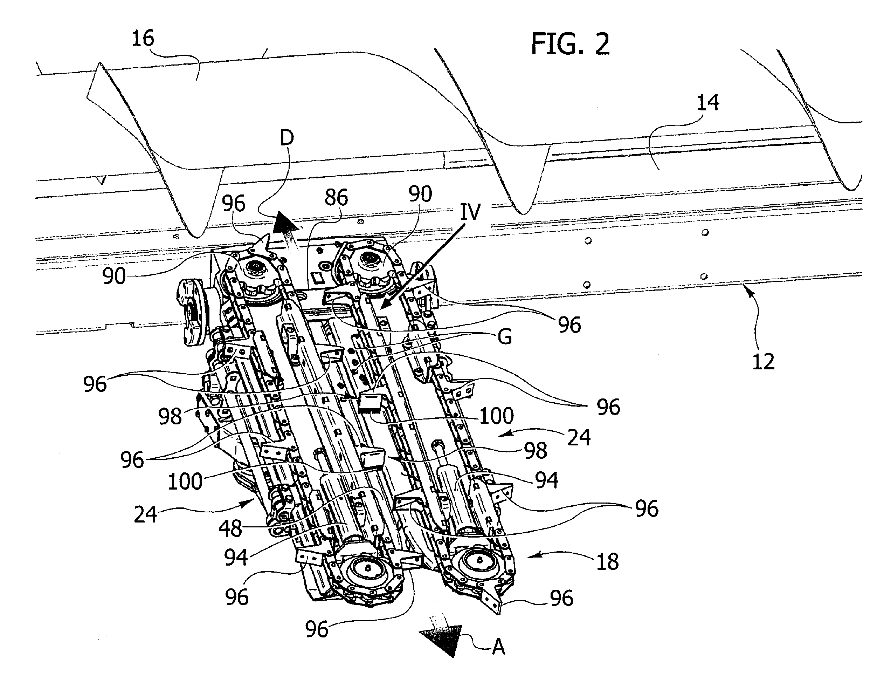

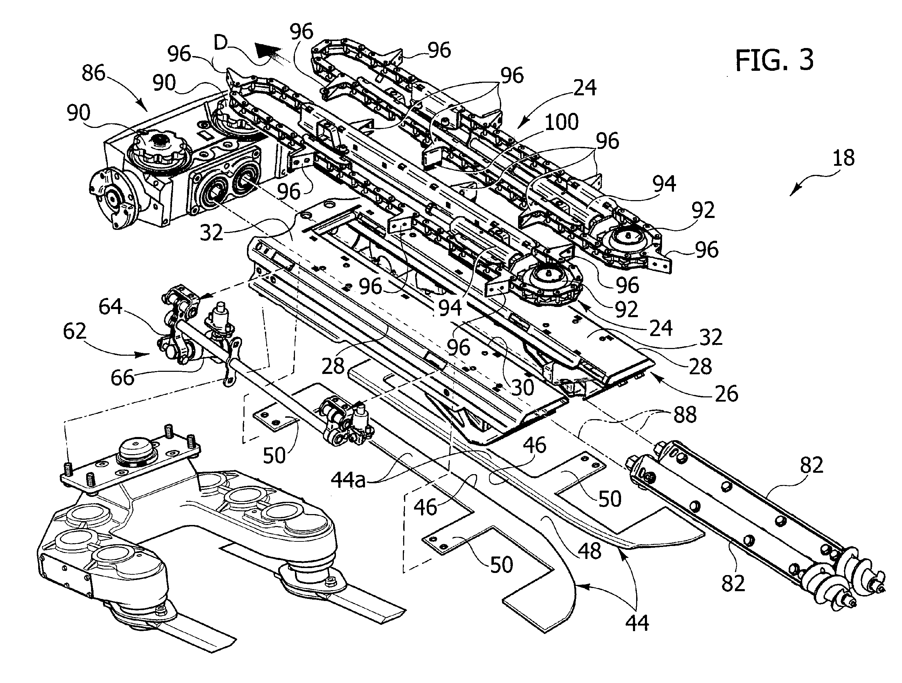

With reference to Figures 2 and 3, each harvesting unit 18 comprises a framework 26 fixed with respect to the supporting structure 12. The framework 26 comprises two box sections 28, preferably made of sheet metal, set at a distance from one another in a transverse direction by an empty space 30 elongated in a longitudinal direction. The box sections 28 have respective mutually coplanar plane top walls 32 that extend on opposite sides of the empty space 30.

Each harvesting unit 18 comprises two stripper plates 44 carried by the respective box sections 28 of the fixed framework 26. The stripper plates 44 have respective preferably plane top surfaces 44a and respective edges 46 facing one another. The stripper plates 44 extend within the respective box-section portions 28. The parts of the stripper plates 44 adjacent to the edges 46 project on the outside of the box-section portions 28 and extend on opposite sides in the empty space 30 defined between the box sections 28. The facing edges 46 define a squeezing channel 48 elongated in a longitudinal direction A. The stripper plates 44 have respective appendages 50 that extend on the outside of the box section 28 on the opposite side of the squeezing channel 48.

Preferably, the stripper plates 44 are mobile in a vertical direction with respect to the respective box sections 28 between a raised position and a lowered position and are associated to respective spring devices (not visible in the drawings) that push the stripper plates 44 elastically towards the respective raised positions.

Preferably, the stripper plates 44 are associated to an automatic adjustment mechanism 62, which automatically adapts the width of the squeezing channel 48 to the size of the maize stalks. The adjustment mechanism 62 comprises, for each stripper plate 44, a rocker 64 and an elastic device 66. Each rocker 64 is articulated in a central part thereof to the respective box section 28. The top end of each rocker 64 is articulated to a respective appendage 50 of a stripper plate. The bottom end of each rocker 64 is articulated to a mobile element of the elastic device 66. The forces produced by the elastic devices 66 push the edges 46 of the stripper plates 44 towards one another in such a way that the edges 46 are constantly pressed against the maize stalks entering the squeezing channel 48. The stripper plates 44 move in a transverse direction according to the diameter of the stalks entering the squeezing channel 48. Consequently, the width of the squeezing channel 48 automatically adapts to the diameter of the stalks.

With reference to Figure 3, each harvesting unit 18 comprises a pair of counter-rotating traction rollers 82 arranged underneath the squeezing channel 48. The traction rollers 82 are carried in cantilever fashion by a respective transmission assembly 86 fixed to the supporting structure 12. The transmission assembly 86 drives the rollers 82 in rotation about respective mutually parallel longitudinal axes 88. The traction rollers 82 are preferably equipped with blades designed to grip the stalks that are in the squeezing channel 48.

Rotation of the traction rollers 82 causes a traction of the stalks in a vertical direction. The maize stalks enter the squeezing channel 48 as a result of the advance of the machine 10 in the direction A. The rollers 82 draw the stalks that are in the squeezing channel 48 downwards. The edges 46 of the stripper plates 44 are pressed against the stalks so that the width of the squeezing channel 48 is equal to the diameter of the stalks. The cobs come into contact with the top surfaces 44a of the stripper plates 44. The action of drawing downwards of the stalks caused by the rotation of the traction rollers 82 brings about detachment of the cobs from the stalks. The detached cobs remain on the top surface 44a of the stripper plates 44.

Each harvesting unit 18 comprises a pair of harvesting chains 24. The harvesting chains are arranged on top of the respective box sections 28 of the framework 26. Each harvesting chain 24 is wound in a closed loop on a drive gear 90 and on a return gear 92. The drive gears are driven in rotation about respective vertical axes by the transmission assembly 86. The return gears 92 are preferably carried by respective spring tensioners 94 fixed to the top walls 32 of the box sections 28.

With reference to Figures 2-4, each harvesting chain 24 carries a plurality of thrust elements 96 that project from the outer side of the respective chain 24. The thrust elements 96 push the cobs C that lie on the top surfaces 44a of the stripper plates 44 in a direction of harvesting D opposite to the direction of advance A. The thrust elements 96 convey the cobs C towards the transverse conveying channel 14.

The impact of the cobs on the top surface of the stripper plates can cause detachment of grains of maize G from the cores of the cobs. The detachment of the grains from the cores of the cobs is particularly important when harvesting very dry maize. The loose grains of maize G generally remain on the top surfaces 44a of the stripper plates.

To avoid the loss of the loose grains of maize G, at least one of the thrust elements 96 of each chain 24 carries a member for gathering the grains 98 designed to convey in the direction of harvesting D the loose grains of maize G that lie on the top surfaces 44a of the stripper plates 44.

Each member for gathering the grains 98 slides on the top surface 44a of the respective stripper plate 44. Preferably, each member for gathering the grains 98 has a flexible contact portion 100 that slides against the top surface 44a. Preferably, the flexible contact portion 100 is formed by a brush.

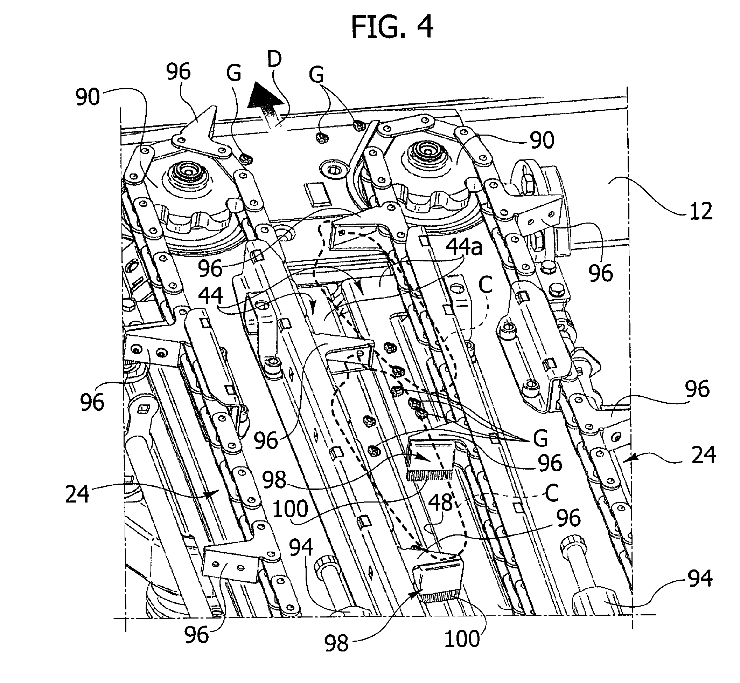

As may be seen in particular in Figure 4, during the movement of the harvesting chains 24 the members for gathering the grains 98 gather the loose grains G that lie on the top surfaces 44a of the stripper plates 44 and convey them in the direction of harvesting D together with the cobs C. The loose grains G are pushed together with the cobs in the transverse conveying channel 14.

The fact of providing stripper plates 44 that are mobile vertically and associated to spring devices in part reduces the problem of detachment of the grains from the cores of the cobs. However, also in this case it is possible for there to be a loss of grains, above all when harvesting very dry maize. The use of the members for gathering the grains 98 in combination with the mobile and elastically dampened stripper plates represents the most complete solution for reducing as much as possible the loss of crop due to the removal of the grains from the cobs. In this case, the flexibility of the contact portion 100 is particularly advantageous because it enables contact with the top surface 44a of the respective stripper plate 44 to be maintained also during the movement in a vertical direction of the stripper plate. The members for gathering the grains 98 could, however, be used also with non-dampened stripper plates.

## Claims

1. A machine for harvesting maize, comprising a supporting structure (12) carrying a plurality of harvesting units (18) set alongside one another in a transverse direction, wherein each harvesting unit (18) comprises:
- a framework (26) fixed with respect to the supporting structure (12) and including two box sections (28) set at a distance from one another in a transverse direction by an empty space (30) elongated in a longitudinal direction (A);
- two stripper plates (44) carried by respective box sections (28), the stripper plates (44) having respective top surfaces (44a) and respective edges (46) facing one another that extend on opposite sides in said empty space (30), the facing edges (46) of said stripper plates (44) forming a squeezing channel (48);
- a pair of counter-rotating traction rollers (82) arranged underneath said squeezing channel (48), set for drawing downwards stalks of maize plants contained in said squeezing channel (48) in such a way that, in operation, the cobs (C) of the maize plants contained in said squeezing channel (48) are detached from the respective stalks and gather on said top surfaces (44a) of said stripper plates (44); and
- a pair of harvesting chains (24), which move along respective closed-loop paths and are equipped with respective thrust elements (96), which move on top of respective top surfaces (44a) of said stripper plates (44) for drawing in a direction of harvesting (D) the cobs (C) that lie on said stripper plates (44),
said machine being **characterized in that** at least one of said thrust elements (96) of each of said harvesting chains (24) carries a member for gathering the grains (98) that slides on the top surface (44a) of the respective stripper plate (44) for pushing loose grains of maize (G) that lie on said top surfaces (44a) in said direction of harvesting (D).

2. The machine according to Claim 1, **characterized in that** each of said members for gathering grains (98) has a flexible contact portion (100) that slides on said top surface (44a) of the respective stripper plate (44).

3. The machine according to Claim 2, **characterized in that** said flexible contact portion (100) is formed by a brush.

4. The machine according to any one of Claims 1-4, **characterized in that** each of said stripper plates (44) is mobile in a vertical direction with respect to the respective box section (28) and is associated to a respective spring device that pushes the stripper plate (44) upwards.
